# EUROPEAN PATENT APPLICATION

(11) **EP 1 883 069 A2**
(43) Date of publication of application: **30.01.2008**
(21) Application number: 07075843.8
(22) Date of filing: 10.09.2004
(51) Int. Cl.: G11B 20/00, G11B 20/12, G06F 21/00

(54) **Secure access and copy protection management system**

(30) Priority: 08.10.2003 US 509603 P; 09.01.2004 US 754677
(62) Divisional of application: 04817240.7
(71) Applicant: MACROVISION CORPORATION, Santa Clara, CA 95050 (US)
(72) Inventor: Shavit, Eyal, Palo Alto, CA 94303 (US); Selve, Philippe Marcel Henri, Berkshire RG40 5YA (GB); Dvir, Ori, Berkshire RG5 4PJ (GB)
(74) Representative: Beresford, Keith Denis Lewis

(57) **Abstract**

An application, media drive, and media are configured so as to cooperate with one another to provide secure access and copying of protected content on the media. The application cooperates with the media drive to identify the media as a cooperating component, and in the process, also identifies the media drive as a cooperating component. The media includes information facilitating such identifying activity, such as a fingerprint indicating the copy protection method used to protect the content. Also included on the media is a guard module that authenticates the application as a cooperating component, establishes secure channels respectively with the application and the media drive for communicating secret information, installs licences included on the media, and only allows access to the protected content if the media is an original copy. The application then manages usage and/or copying of the protected content according to the installed licenses.

## Description

### FIELD OF THE INVENTION

The present invention generally relates to the management of protected content and in particular, to a secure access and copy protection management system.

### BACKGROUND OF THE INVENTION

The proliferation of personal computers with read/write devices such as CD-R/W and DVD-R/W, and the widespread acceptance of the Internet have become both boon and bane to content providers. The distribution of content on tangible media such as CD and DVD has become standard practice for some time now for authorized copying and distribution, because of their large storage capacity and low media cost.

With the availability of high speed Internet connections, distribution through downloading of content is proving to be even more beneficial as a convenient and low cost distribution medium since it eliminates the cost of the tangible medium, the cost of its shipping to a customer, and the time that the customer has to wait for the purchased product. Unfortunately, however, these same mediums have also.facilitated the unauthorized copying and distribution of content.

Consumers, however, currently view CD-R burning as a basic function that is generic to music consumption. Content owners share this view, but at the same time need a mechanism to exercise control over the number of CD-R copies made. CD-ROM drive manufacturers need to provide burning capability to consumers while respecting the content owners' rights to protect their content. Balancing these needs is critical to a solution that will sustain long-term growth in both industries. As DVD becomes widespread, it will generate similar problems and issues.

### OBJECTS AND SUMMARY OF THE INVENTION

Accordingly, it is an object of the present invention to provide a secure access and copy protection management system that preserves the legitimate expectations of consumers or end-users with regards to the copying or exporting of licensed content.

Another object is to provide a secure access and copy protection management system that protects the rights of content owners by preventing unauthorized copying of their content.

Still another object is to provide a secure access and copy protection management system that is easy to implement with cooperative activities of content providers, application providers, and drive manufacturers.

These and additional objects are accomplished by the various aspects of the present invention, wherein briefly stated, one aspect is a method for providing secure exporting of content, comprising: causing a media drive to identify whether content on a media inserted in the media drive is protected by a copy protection method known by the media drive so that if such identification is made, exporting of the content is performed in accordance with terms of one or more licenses corresponding to the content.

Another aspect is an apparatus for providing secure exporting of content, comprising a processor configured with an application programmed to cause a media drive to identify whether content on a media inserted in the media drive is protected by a copy protection method known by the media drive so that if such identification is made, the application causes exporting of the content managed by the application to be performed according to terms of one or more licenses corresponding to the content.

Another aspect is an apparatus for providing secure access and copy protection management of content, comprising: a media drive configured to identify upon command a copy protection method used to protect the content on a media inserted in the media drive; and a processor configured with an application program to issue such command and conform its accessing and copying of the content according to terms of one or more licenses corresponding to the content if such identification is made by the media drive.

Another aspect is a method for identifying a media as being a secure media configured to provide secure access to content residing on the media in cooperation with other components of a secure access and copy protection management system, comprising: (1) retrieving an index from the media; (2) if the index is not found, then indicating the media as a non-secure media; and (3) if the index is found, then (a) identifying a fingerprint on the media, wherein the fingerprint is indicative of a copy protection method used to protect the content on the media, (b) retrieving an indication of a copy protection method indexed by the index, (c) comparing the copy protection method indicated by the retrieved fingerprint with the copy protection method indexed by the index, and (d) if the copy protection method indicated by the retrieved fingerprint matches the copy protection method indexed by the index, then indicating the media as a secure media.

Another aspect is a system for secure access and copy protection management of content, comprising: a media configured to include an index uniquely corresponding to a copy protection method used to protect content on the media, and a fingerprint indicating the copy protection method; a media drive configured to retrieve the index from the media, retrieve an indication of a second copy protection method indexed to the index and stored within the.media drive, identify the fingerprint on the media and the copy protection method indicated by the fingerprint, and verify that the second copy protection method indexed to the index matches the copy protection method indicated by the fingerprint; and an application program configured to conform its accessing and copying of the content according to one or more licenses corresponding to the content if the media drive verifies that the second copy protection method indexed to the index matches the copy protection method indicated by the fingerprint.

Another aspect is a method for securely accessing content on a media, comprising: decrypting and executing a guard module computer program stored along with the content on the media if the content is protected using a copy protection method known to a media drive; establishing a first secure channel between the guard module computer program and an application computer program requesting to access the content on the media if the application computer program is authenticated by the guard module computer program; establishing a second secure channel between the guard module computer program and the media drive if the copy protection method used to protect the content is known by the media drive; and retrieving a license for rights management of the content from the media through the second secure channel and transmit the license to the application computer program through the first secure channel so that the application program cannot readily understand information passed through the second secure channel and the media drive cannot readily understand information passed through the first secure channel.

Additional objects, features and advantages of the various aspects of the present invention will become apparent from the following description of its preferred embodiment, which description should be taken in conjunction with the accompanying drawings.

### BRIEF DESCRIPTION OF THE DRAWINGS

**FIG. 1** illustrates a block diagram of a secure access and copy protection management system utilizing aspects of the present invention.
**FIG. 2** illustrates a diagram of key components in a secure access and copy protection management system, utilizing aspects of the present invention.
**FIG. 3** illustrates a diagram of primary functions performed within a secure access and copy protection management system, utilizing aspects of the present invention.
**FIG. 4** illustrates a record format for a secure media including audio content managed by a secure access and copy protection management system, utilizing aspects of the present invention.
**FIG. 5** illustrates a flow diagram of a method for performing an identification function in a secure access and copy protection management system, utilizing aspects of the present invention.
**FIG. 6** illustrates a flow diagram of a method for performing an access authorization function in a secure access and copy protection management system, utilizing aspects of the present invention.
**FIG. 7** illustrates a flow diagram of a method for performing application verification of an authorization function in a secure access and copy protection management system, utilizing aspects of the present invention.
**FIG. 8** illustrates a flow diagram of a method for performing a secure access function in a secure access and copy protection management system, utilizing aspects of the present invention.
**FIG. 9** illustrates a flow diagram of a method for performing a secure export function in a secure access and copy protection management system, utilizing aspects of the present invention.
**FIG. 10** illustrates a flow diagram of a method for determining whether an export to a secure CD-R is allowed in performing a secure export function in a secure access and copy protection management system, utilizing aspects of the present invention.
**FIG. 11** illustrates a flow diagram of a method for managing an export to a secure CD-R in performing a secure export function in a secure access and copy protection management system, utilizing aspects of the present invention.

### DETAILED DESCRIPTION OF THE PREFERRED EMBODIMENT

The term "content" as used herein includes copyrightable material (such as audio, video, audio-visual, text, graphic images, and computer programs), as well as generally non-copyrightable material such as data.

The term "secure" before an application or device means that the following application or device is one that respects access and copy protection technology (i.e., it only allows access and copying of protected content by interfacing with the technology protecting it).

The term "application" means a software program such as a media player or CD burning application that a user interfaces with for the playing and/or exporting of content.

The term "media drive" means a drive for reading and/or recording content from and to media such as a CD R/W or DVD R/W disc drive for handling optical media.

The term "media" means a tangible medium carrying content such as a CD or DVD or other optical disc.

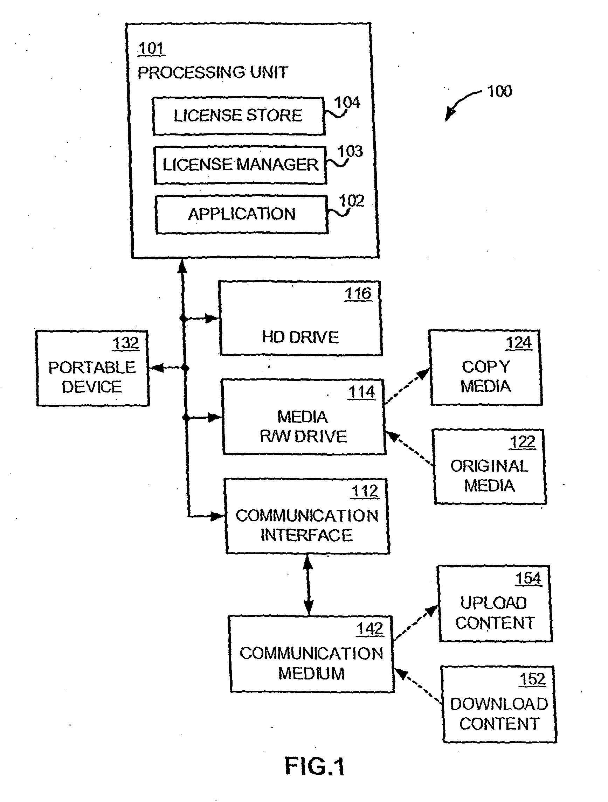

**FIG. 1** illustrates, as an example, a block diagram of a Secure Access and Copy Protection Management System **100**. In the system, a Processing Unit **101** such as a personal computer has various software modules residing in its memory for execution, and various hardware units coupled to it through one or more of its buses.

Three of such software modules are a secure Application **102,** a License Manager **103,** and a License Store **104** that cooperate with one another to form part of a conventional Digital Rights Management ("DRM") system.

Three hardware units that are continuously coupled to the Processing Unit **101** (as indicated by solid bus lines) are a Communication Interface **112** such as a network interface or modem card, a secure Media Drive **114**, and a Hard Disk ("HD") Drive **116.** One hardware unit that is only occasionally coupled to the Processing Unit **101** (as indicated by a dotted bus line) is a Portable Device **132** such as an MP3 player.

The Media Drive **114** is adapted to read information from media inserted into it such as Original Media **122** (shown as being inserted into the Media Drive **114** by an inward pointing dotted arrow), and to write information to media inserted into it such as Copy Media **124** (shown as being ejected from the Media Drive **114** by an outward pointing dotted arrow). The Copy Media **124** in this case is preferably a secure CD-R ("SCDR") that can only be created if both the Application **102** and the Media Drive **114** are secure components. The Copy Media **124** is generated such that its contents cannot be readily copied. For audio content, it is generally recorded on a CD-R in such a fashion that it cannot be played back on a data reading device such as the Media Drive **114.** It can only be played back on an audio player such as a conventional audio CD player.

The Communication Interface **112** is coupled to a Communication Medium **142** such as the Internet so as to be able to receive Download Content **152** (per inward pointing dotted arrow), and transmit Upload Content **154** (per outward pointing dotted arrow) to other processing units coupled to the Communication Medium **142.** All such downloads and uploads are preferably managed by the Application **102** in cooperation with other elements of its local DRM system in the Processing Unit **101.** In addition to downloading and uploading content over the Internet, the Communication Interface **112** also provides a means for the local DRM system to download licenses and updates for content from designated web sites.

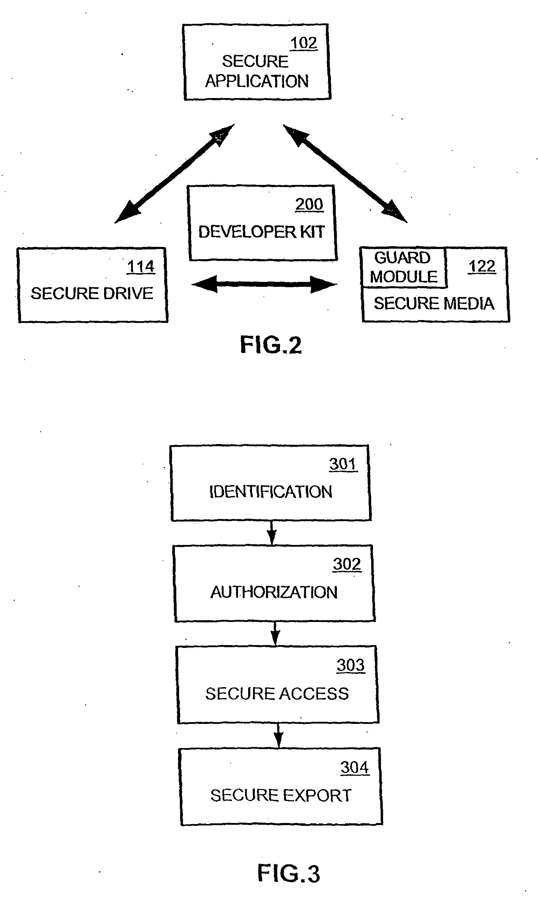

**FIG. 2** illustrates, as an example, a diagram of key components in the Secure Access and Copy Protection Management System **100.** Unlike copy.protection mechanisms implemented in only one dimension such as software executed on a computer, the Secure Access and Copy Protection Management System **100** of the present invention preferably employs a three dimensional approach in which the Original Media **122,** Media Drive **114,** and Application **102** act as secure components (e.g., applications or devices) that cooperate or otherwise interact with each other in a secure fashion to perform various functions and/or procedures that provide secure access and copy protection of content stored on the Original Media **122.**

The Developer's Kit **200** facilitates implementation of the various functions and/or procedures in secure applications and devices for providing secure access and copy protection of content. In particular, it includes Libraries, APIs, tools, sample code, and documentation that enable secure application and secure device designers to design components that establish and manage the secure interaction.

**FIG. 3** illustrates, as an example, a diagram of primary functions performed within the Secure Access and Copy Protection Management System **100.** An Identification function **301** is the mechanism by which secure applications and secure devices recognize a secure media such as a secure CD ("SCD") or secure CDR ("SCDR") as well as identify the copy protection method that makes the media secure. This mechanism triggers the secure application and/or secure device to respect specified access and copy protection measures.

An Authorization function **302** is the mechanism by which an application requesting access to protected content is authenticated, and secure channels are set up between communicating components of the Secure Access and Copy Protection Management System **100** for secure passage of information between the communicating components.

A Secure Access function **303** is the mechanism by which licenses are installed from the secure media or online via a remote connection that grant rights governing the usage of content, and the content is accessed in a manner respecting those rights.

A Secure Export function **304** is the mechanism by which copy protected content is exported, for example, from an SCD to the end user's hard disk drive, or from the user's hard disk drive to a portable device or to an SCDR. This mechanism is implemented using functions of the Developer's Kit **200.**

Before describing the mechanisms for the functions **301**~**304** in detail, it is useful to describe an example of an audio SCD or SOM that is to be protected by the Secure Access and Copy Protection Management System **100.** It is to be appreciated, however, that other examples of SCDs and content other than or in addition to audio data are also contemplated to be within the full scope of the various aspects of the present invention.

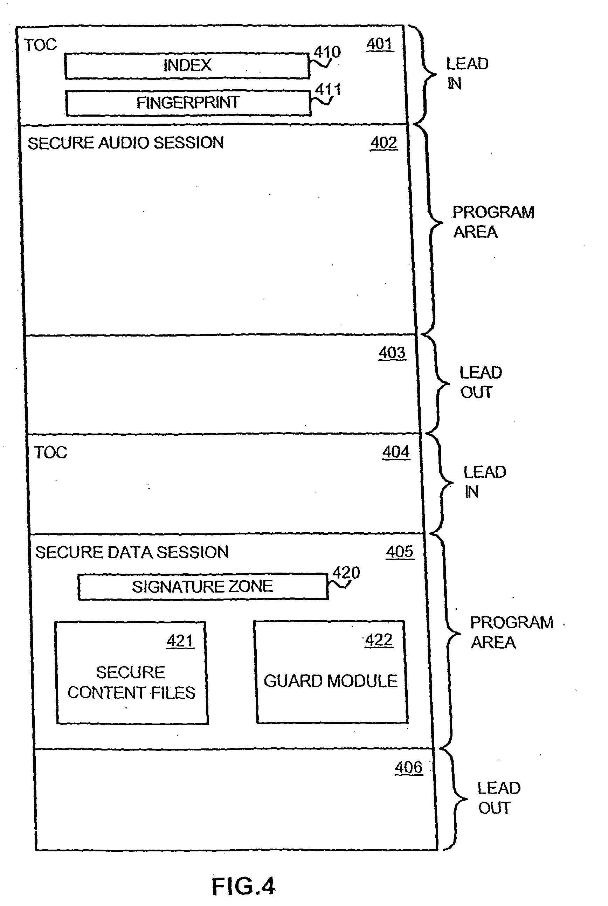

**FIG. 4** illustrates a format for a multi-session compact disc. It includes two program areas respectively storing a Secure Audio Session **402** in a first program area, and a Secure Data Session **405** in a second program area. Each of the program areas is preceded by a lead-in section and followed by a lead-out section. Each lead-in section stores, and is therefore also referred to as, a Table of Contents ("TOC") for its corresponding program area.

The Secure Audio Session **402** includes audio data conforming to Red Book standards so that it can be played back by conforming consumer audio players. It is referred to as being "secure" in this case, because it is protected so as to prevent a non-secure data reading and/or recorder device, such as a non-secure CD-ROM drive, from reading, playing and/or copying its contents.

One copy protection method for protecting the Secure Audio Session **402** is described in commonly owned, International Publication Number WO 00/74053 A1 entitled "The Copy Protection of Digital Audio Compact Discs," which is incorporated herein by this reference. In this method, selected control data are rendered incorrect and/or inaccurate so that a data reading and/or recording device is unable to read the protected session, whereas an audio player can read and play the audio session, because the selected control data are either inaccessible to, or not generally read by, the audio player.

As an example of this method, the Table of Contents ("TOC") in a lead-in section.of the program area is modified by specifying the location of the lead-out section as being within or before the program area, so that the data reading and/or recording device will not read past that modified location. As another example, the TOC is modified by specifying the content type as being data, rather than audio. In this case, the data reading and/or recording device will not read the audio, because SYNC and sector headers normally provided with data are not found. As still another example, fake tracks may be added in the TOC. In each of these examples, the TOC modifications confuse drives or data reading and/or recording devices that attempt to access the audio session tracks for copying while having minimal effect on audio players.

Included in a TOC **401** for the Secure Audio Session **402** are an Index **410** and a Fingerprint **411** that are integral parts of the Secure Access and Copy Protection Management System **100.** The Index **410** is a public numeric value that is accessible to both secure and non-secure components. It is preferably located in a constant specific position on the SCD, and is used to convey information to secure components about the version of the SCD such as the copy protection method(s) that the SCD contains and/or a unique identification number identifying the content of the SCD. It can also be used by non-secure components to identify SCDs and improve end user experience, for example, by displaying appropriate notices.

The Fingerprint **411** is protected information that is shared only with secure components like a shared secret. It is used for identification purposes to indicate that the disc in question is an SCD. It is preferably designed to be hard to remove yet simple enough to enable any secure component to test any disc to determine if it is an SCD.

For example, the Fingerprint **411** may be a robust stegonographic signature placed on the SCD. In the present implementation, the Fingerprint **411** is indicative of the copy protection method used for protecting the Secure Audio Session **402,** such as the TOC modification described above.

The Secure Data Session **405** includes a Signature Zone **420,** Secure Content Files **421,** and a Guard Module **422.** Optionally, an Embedded Rights File ("ERF") or license(s) may also be included. Although in this example, the audio content is read from the Secure Content Files **421,** it is to be appreciated that inclusion of the Secure Content Files **421** is optional, since the audio data can be read from the Secure Audio Session **402** if the copy protection method protecting the Secure Audio Session **402** is known by the Application **102** or the Media Drive **114.**

The ERF is a simple file (in a script meta language such as XRML for example) that contains specific DRM rights associated with each of the audio tracks in the audio content. In the event that a secure component (such as secure Application **102** or secure Media Drive **114**) is granted access to the Red Book session files in the Secure Audio Session **402,** this ERF file must be exported into the calling secure component as it specifies the rights associated with the tracks. Note, on the other hand, that in the event that a secure component is granted access to the Yellow Book session files in the Secure Data Session **405,** the ERF file is generally the same as the rights specified in the DRM wrapper.

If it is desired that only a secure media device be allowed to access the Secure Data Session **405,** then a copy protection method such as employed with the Secure Audio Session **402** may be used. For example, the TOC **404** may be modified in a fashion that only secure components know so that non-secure media devices will not be able to access the Secure Data Session **405.** As will be described below, however, even if a non-secure media drive is allowed access to the Secure Data Session **405** for playback, it will not be allowed to burn a copy of the Secure Content Files **421** in the preferred implementation of the present invention.

The Signature Zone **420** stores a Signature that is placed on the SCD at the time of its manufacture to identify the SCD as an original copy. The Signature is placed on the SCD in a manner so that it cannot be copied by a data reading and/or recording device. Therefore, copies of the SCD will not include the Signature and consequently, can be readily identified as copies and not the original. Details on such a Signature are described in commonly owned U.S. Pat. No. 6,353,890 B1 entitled "Method for Copy Protecting a Record Carrier, Copy Protected Record Carrier and Means for Detecting Access Control Information," which is incorporated herein by this reference.

The Secure Content Files **421** are DRM files that include audio data conforming to Yellow Book standards so that they can be read by conforming data reading devices. Thus, although data reading devices, such as a CD-R/W or DVD R/W drive, cannot read the audio data in the Secure Audio Session **402,** they may be able to read the audio data in the Secure Data Session **405.** One example of a DRM file structure is described in commonly owned, U.S. Pat. No. 5,845,281 entitled "Method and System for Managing a Data Object so as to Comply with Predetermined Conditions for Usage," which is incorporated herein by this reference, wherein the DRM file comprises a user set of control data concatenated to an encrypted data object. A user program in that case determines whether the requested usage of the data object complies with the control data. The usage is enabled if it does, and disabled if it doesn't. The user set of control data in this case is also referred to herein as the DRM wrapper.

The Guard Module **422** facilitates secure access to the Secure Content Files **421.** It serves as a primary access point to the media by performing certain authentication and subsequent local licensing functions on behalf as described further herein. The Guard Module **422** is encrypted, and protected by a wrapper that includes an authentication module and anti-hacking software. When the authentication module detects that the Signature in the Signature Zone **420** is present, it allows the Guard Module **422** to be decrypted and executed. Decryption and execution of the Guard Module **422** is done in real-time so that a copy only resides temporarily in system memory, and a clean copy is never loaded on the hard disk drive or other permanent storage of a personal computer or other processing unit executing the decrypted Guard Module **422.**

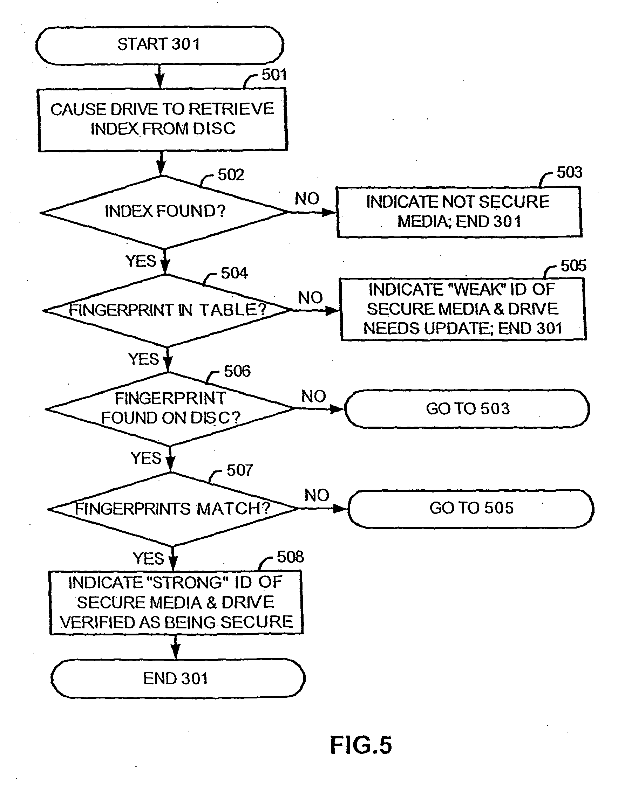

**FIG. 5** illustrates, as an example, a flow diagram of a method for performing the Identification function **301** in the Secure Access and Copy Protection Management System **100.** The method is generally performed by the secure Application **102** in cooperation with a media drive for identifying the secure or non-secure status of a media inserted in the media drive. The status of the media drive as being a secure or non-secure media drive may also be determined provided certain conditions are met. The media drive may be the Media Drive **114** if it is a secure media drive, or it may be a non-secure media drive. Likewise, the inserted media may be the Original Media **122** if it is an original copy from an authorized provider of the content, the Copy Media **124** if it is a secure copy of the original, or it may be a non-secure media.

The Identification function **301** is performed as a two step process. Both steps must be performed successfully in order for the media to be identified and treated as a secure media. The first step described in reference to **501~503** below is simple to compute and not based on secret information. It is designed to be simple enough so that any drive (whether secure or not) can test any media (whether secure or not) with no loss in drive speed, performance or user experience. The second step described in reference to **504~508** below is more complex and based on secret information. Although the following description indicates that the secure Application **102** causes the media drive to perform these steps, a secure media drive may also be configured through its firmware to automatically perform one or both of these steps when a media is inserted in the media drive. It that case, the Application **102** would only need to read the results from one or more registers in the secure media drive.

In **501,** the Application **102** causes the media drive to read and optionally return the Index **410** to the Application **102** from the inserted media. It does this, for example, by sending a command to do so through a SCSI MMC command. It doesn't matter whether the media drive is a secure or non-secure media drive, because both types of media drives are able to respond to this command and read the Index **410.**

In **502,** if the Index **410** is not found at its expected location, then the Application **102** knows that the inserted media is not a secure media. Therefore, in **503,** a flag or other means is set by the Application **102** indicating that the inserted media is not a secure media. In this case, the "non-secure media" flag may be one or more bits reserved in a status register associated with the Application **102.** At this point, since the media is not a secure media, the Identification function **301** is ended.

On the other hand, if the Index **410** is found at its expected location in **502,** then the Application **102** knows that the inserted media is probably a secure media. Note that the Application **102** does not know for sure at this point that the media is a secure media, because the media may have been tampered with by a party who has intentionally or inadvertently inserted a value in the expected location of the Index **410.**

In **504,** the Application **102** causes the media drive to try to retrieve an indication of a copy protection method in its firmware that corresponds to the Index **410.** If indexed properly, the retrieved indication should indicate the same copy protection method indicated by the Fingerprint **411** that is used to protect the Secure Audio Session **402.** The media drive searches the internal firmware data structures for the fingerprint, for example, by searching in an internal table or database stored in the firmware of the media drive. To cause the media drive to do this, the Application **102** sends, for example, a pre-defined command through an unused OpCode in the same or subsequent SCSI MMC command sent in **501.** A secure media drive is designed or otherwise configured so that it will be able to interpret the pre-defined command as a valid command (using, for example, the Developer's Kit **200** of **FIG. 2**), whereas a non-secure media drive will not be able to do so and therefore, will return an "INVALID COMMAND OPERATION CODE" error.

Assuming that the media drive is able to understand and respond to the command in **504,** then if the media drive is unable to find a fingerprint referenced by the Index **410** in its firmware, then in **505,** the Application **102** indicates that only a "weak" identification of the media has been made, and that the media drive needs to be updated since no indication of a copy protection method referenced by the Index **410** (assuming it is valid) has been found in the internal table or database stored in its firmware. In this case, the "non-secure media" flag is not set as done in **503.** Instead, it is set to a different value indicating that a "weak" identification has been made. Also, a "drive status" flag is changed from its initial default setting (indicating a non-secure media drive) to indicate that the media drive needs an update. The Identification function **301** is then ended at this point since nothing more regarding the identification of the media as being secure or not can be done until an update to the firmware is received.

On the other hand, if the media drive is able to find the indication of a copy protection method referenced by the Index **410** in its firmware, then in **506,** the Application **102** causes the media drive to attempt to read or otherwise determine the Fingerprint **411** from the media. In this case, the Fingerprint **411** (if found) indicates the copy protection method used for protecting the Secure Audio Session **402.** Therefore, where the copy protection method is a modification to the TOC **401** as previously described, then finding no modification to the TOC **401** is equivalent to not finding the Fingerprint **411.**

If the Fingerprint **411** is not found in **506,** then the method jumps back to **503** to indicate that the media is not a secure media and to end the Identification function **301.** If the Fingerprint **411** is found in **506,** however, then in **507,** the Application **102** causes the media drive to match or compare the copy protection methods indicated in **504** and **506.** This action may be part of the command issued in **504** or it may be a new command issued after the Application **102** receives notification that the media drive has found the Fingerprint **411.** If a new command is issued, the Application **102** does this by sending, for example, another pre-defined command that is understood by a secure media drive, as previously described, through an unused OpCode in am SCSI MMC command. If the two copy protection methods do not match, then the method jumps back to **505.** In that case, the Application **102** indicates that a "weak identification" of the media has been made and that the firmware of the media drive needs to be updated since the Index **410** references a different copy protection method than the Fingerprint **411.** The Identification function **301** is ended at this point since nothing more regarding the identification of the media as being secure or not can be done until an update to the firmware is received.

On the other hand, if the two copy protection methods do match in **507,** then, in **508,** the Application **102** indicates that a "strong" identification has been made. In this case, the "non-secure media" flag is not set as done in **503.** Instead, it is changed from its initial default setting to a different value indicating that a "strong" identification indicating that the media is a secure media has been made. In addition, at this point, the Application **102** knows that the media drive is a secure media drive since it has been able to perform a "strong" identification of the media. Therefore, the Application **102** also sets the "drive status" flag to indicate that the media drive is secure. The Identification function **301** is then ended.

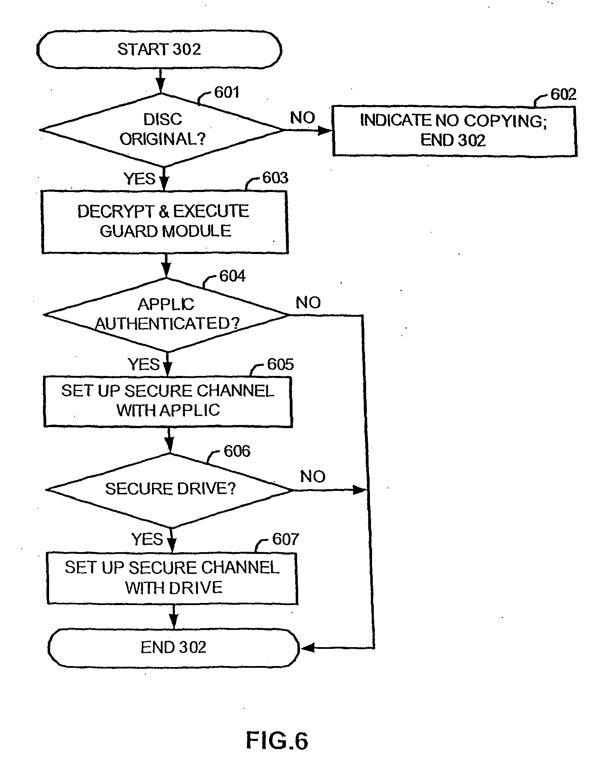

**FIG. 6** illustrates, as an example, a flow diagram of a method for performing the Authorization function **302** in the Secure Access and Copy Protection Management System **100** in content access mode. As a preliminary matter, it is noted that this function is only performed if the inserted media has been determined to be a secure media disc. The Application **102** determines this by checking the "non-secure media" flag previously described in reference to **503, 505** and **508** of **FIG. 5.**

Now, assuming the inserted media is a secure media (e.g., an SCD), then in **601,** the Application **102** causes the media drive to load and execute the authentication module in the wrapper protecting the Guard Module **422.** The authentication module then determines whether the inserted media is an original copy by reading a Signature placed on the SCD in the Signature Zone **420** at the time of its manufacture so as to indicate that the Original Media **122** is an original copy. It is noted that this Signature is to be placed on an original SCD in such a manner that the Signature cannot be copied by a non-secure data reading and/or recording device, and will not be copied by a secure reading and/or recording device. Consequently, the Signature will not be present on any of the original SCD generated by a data reading and/or recording device.

If the Signature is not found in **601** (thus indicating that the media is not an original copy), then, in **602,** the authentication module preferably returns such result back to the Application **102,** and the Application **102** sets a flag or other means indicating that the inserted media is not be copied. An example of such a "no copy" flag is one or more bits reserved in a status register associated with the Application **102.** The Authorization function **302** is then ended at this point.

On the other hand, if the Signature is found in **601** (thus indicating that the media is an original copy), then, in **603,** the authentication module decrypts the Guard Module **422** using a key generated by the authentication module using the Signature as a seed, and causes the Guard Module **422** to be executed preferably by the Processing Unit **101** along with the Application **102.** In **604,** the Guard Module **422** then establishes a secure channel with the Application **102** utilizing an authentication and key exchange procedure ("AKE"). As part of the authentication performed in the AKE, the Guard Module **422** attempts to verify or authenticate the Application **102** as having the capability to properly handle the content on the inserted media that it is attempting to access (i.e., as being properly configured for secure access and copy protection of the content). If the Application **102** is verified, then in **605,** the secure channel is established through secret key exchange.

If the Application **102** is not verified in **604** as part of the AKE procedure, then a secure channel between the Application **102** and the Guard Module **422** is not established, and the Authorization function **302** is ended at this point. In particular, since a secure channel means the sharing of secret keys, the secure channel is not established, because it is not desirable for keys to be shared with non-secure components.

In **606,** the Guard Module **422** checks the "drive status" flag to see if the media drive is a secure media drive. If the flag is set to indicate that it is not a secure media drive or that it needs an update, then the Guard Module **422** leaves the secure channel that it has with the Application **102** open, and the Authorization function **302** is ended.

On the other hand, if the flag is set to indicate that the media drive is a secure media drive, then in **607,** the Guard Module **422** attempts to establish a secure channel with the media drive. To establish the secure channel, an AKE procedure is employed, preferably using different keys than those used in the secure channel between the Guard Module **422** and the Application **102.** Consequently, security is enhanced in this case, because communications between the Application **102** and the Guard Module **422** cannot be readily understood by the media drive, and communications between the media drive and the Guard Module **422** cannot be readily understood by the Application **102**. As an additional security enhancement, all keys used in setting up the secure channels are session keys that are redefined every time the secure channels are set up. The Application **102** and Media Drive **114** cannot communicate with each other directly. The Authorization function **302** is then ended at this point with the Guard Module **422** having set up a secure channel with the Application **102** and a separate secure channel with the media drive.

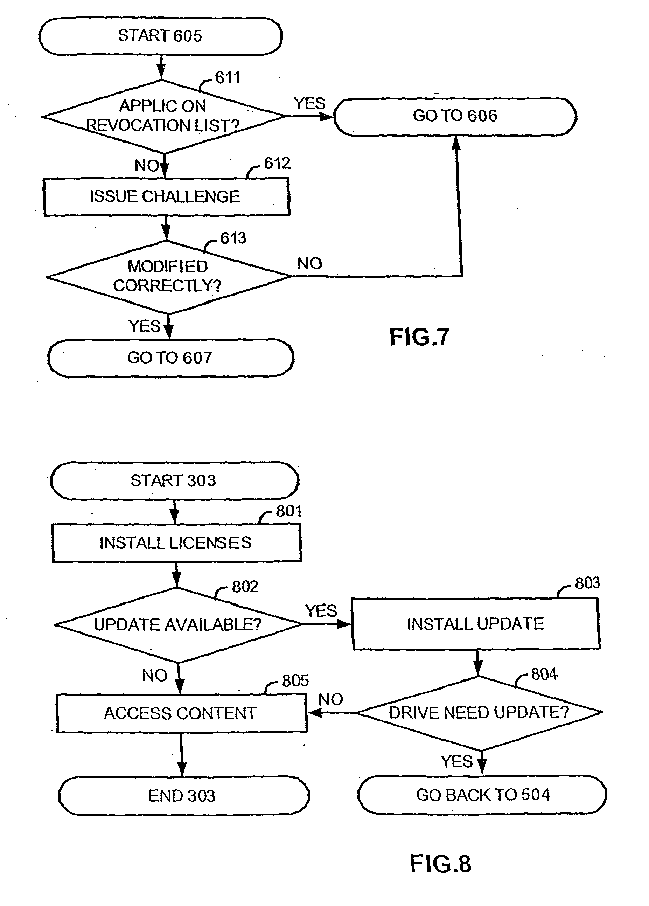

**FIG. 7** illustrates, as an example, a flow diagram of a method for performing **605** of the Authorization function **302** (i.e., verification of the Application **102** as being a secure application). In **611,** the Guard Module **422** checks whether an identification associated with the Application **102** is on a Revocation List safely located in the Guard Module **422** or its wrapper. The Revocation List in this case may include information identifying the Processor Unit **101** associated with Application **102,** or information identifying a user of the Processor Unit **101** associated with the Application **102.** If the identification is found on the Revocation List, then the Guard Module **422** goes to **606** to close the secure channel that it has set up with the Application **102.**

Although a Revocation List is used in this example to indicate users whose rights to access the content have been revoked, it is to be appreciated that other updating mechanisms may also be used to accomplish this purpose and still be within the full scope of the present invention. For example, the Guard Module **422** may require that the Application **102** verify that it is up to date (i.e., has all updates installed). Otherwise, any request made by the Application **102** to access content on the media is refused by the Guard Module **422.**

On the other hand, if the identification associated with the Application **102** is not found on the Revocation List in **611,** then in **612,** the Guard Module **422** issues a challenge to the Application **102.** The Application **102** then responds to the challenge by modifying it according to a predefined algorithm or other technique, and returns the modified challenge back to the Guard Module **422** over the secure channel. As an example, the Guard Module **422** may send a challenge consisting of a string of bits that the Application **102** is expected to modify using the copy protection method referenced by the Index **410** that was previously read from the media as described in reference to **501** of **FIG. 5.**

In **613,** if the Application **102** has not modified the challenge correctly, then the Guard Module **422** goes back to **606** to close the secure channel with the Application **102,** and end the Authorization function **302.** In this case, although the Application **102** may act like a secure application, it has failed to demonstrate the particular knowledge necessary to properly protect any copy of the content that it may export. On the other hand, if the Application **102** does modify the challenge correctly in **613,** then the Guard Module **422** leaves the secure channel open with the Application **102,** and proceeds to **607** to see if it can establish a secure channel with the media drive. In this case, the Application **102** has demonstrated that it can properly protect any copy of the content that it may participate in the export of.

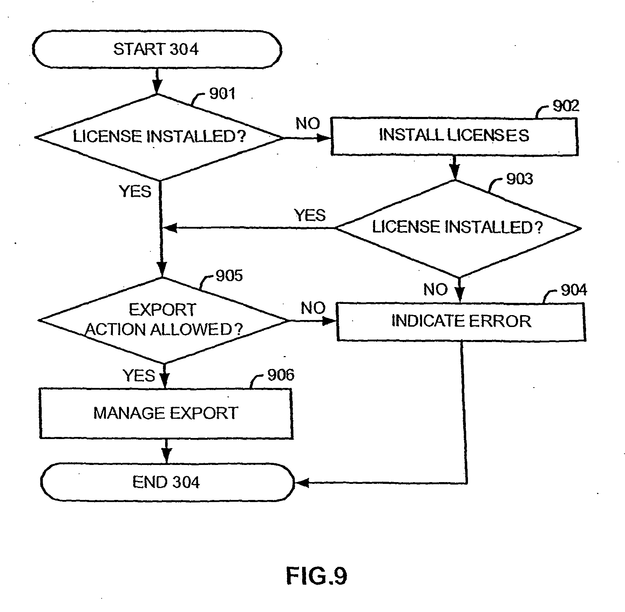

**FIG. 8** illustrates, as an example, a flow diagram of a method for performing the Secure Access function **303** in the Secure Access and Copy Protection Management System **100**. As a preliminary matter, it is noted that this function is only performed if a secure channel is open between the Guard Module **422** and the Application **102.**

In order for the secure channel be open at this time, during performance of the Identification function **301,** the media drive and/or Application **102** must have determined that the inserted media is a secure media; and during performance of the Authentication function **302,** the authentication module in the protective wrapper of the Guard Module **422** must have determined that the inserted media is an original copy, and the Guard Module **422** must have verified or authenticated the Application **102.**

In **801,** if content usage and copying rights (i.e., licenses) are on the inserted media in addition to the Secure Content Files **421,** then the Guard Module **422** retrieves and transmits the licenses to the Application **102** so that it may pass the licenses to the License Manager **103** for storage in the License Store **104**. The Application **102** then operates thereafter in compliance with the licenses by cooperating with other components of its DRM system when exporting or otherwise using the content.

In **802,** the Guard Module **422** checks if updates are available on the media. The updates may include security updates (such as updates to the Revocation List and/or updates to the copy protection method) or functionality updates (for example, to the Application **102,** media drive, or other components to improve or enhance functionality). SCDs manufactured in the plant are the preferred vessels for quickly distributing such updates.

If updates are available, then in **803,** the Guard Module **422** installs the updates on the media drive if they are for the media drive, or transmits them to the Application **102** if they are for the Application **102** or other component of the Secure Access and Copy Protection Management System **100.**

If updates have been installed on the media drive, then in **804,** the Guard Module **422** informs the Application **102** of such installation and the Application **102** checks whether the "drive status" flag is set to an update indication (see **505** and **508** of the Identification function **301** illustrated in **FIG. 5** for details on the setting of this flag). If it is set to an update indication, then the Application **102** retries **504** of the Identification function **301** to see if the media drive can now reference the Index **410** to a fingerprint. If it can, then the Application **102** performs **504∼508** to see if it can obtain a "strong" identification of the media as being a secure media as well as identify the media drive as a secure media drive in the process.

If it is determined in **802** that there are no updates available to be installed or in **804** that the "drive status" flag is not set to indicate an update, then in **805,** the Guard Module **422** allows the Application **102** to access the Secure Content Files **421.** In either case, note that a secure media drive is not required in order to access the Secure Content Files **421** as long as the Application **102** is a secure application. A secure application is necessary in this case, not only to ensure proper usage and exporting of the Secure Content Files **421,** but also because it must know the "secret" of how to unwrap the DRM files in the Secure Content Files **421** in order to access them. After receiving notification from the Guard Module **422** that the Application **102** is allowed access to the Secure Content Files **421,** the Secure Access function **303** is then ended at this point.

As an alternative procedure for performing **801~805,** if the licenses are not on the media, then in **801,** the Application **102** cooperates with other components of its local DRM system to contact the content provider's (or other designated party's) website, conduct the proper transaction to download the licenses, and pass the licenses to the License Manager **103** for storage in the License Store **104.**

In this alternative procedure, in **802,** the Application **102** (or alternatively, the License Manager **103**) checks if updates are available on the website. If updates are available, then in **803,** the Application **102** downloads the updates for installation. For updates to firmware in the media drive, the Application **102** transmits those updates to the Guard Module **422** so that it can install them on the firmware of the media drive.

As in the prior case, if updates have been installed on the media drive by the Guard Module **422,** then in **804,** the Application **102** checks whether the "drive status" flag is set to an update indication. If it is, then the Application **102** retries **504** of the Identification function **301** to see if the media drive can now reference the Index **410** to a fingerprint in its firmware. On the other hand, if the "drive status" flag does not indicate an update is required, the Application **102** informs the Guard Module **422** of this so that in **805,** the Guard Module **422** allows the Application **102** to access the Secure Content Files **421.** The Secure Access function **303** is then ended at this point.

Also as in the prior case, if it is determined in **802** by the Application **102** that there are no updates available to be installed, then the Application **102** informs the Guard Module **422** of this fact so that the Guard Module **422** then allows the Application **102** to access the Secure Content Files **421.** The Secure Access function **303** is then ended at this point.

Other alternative procedures for performing **801**~**805** are also contemplated as being within the full scope of the present invention. As an example of one such alternative, the licenses may be on the media, but updates need to be retrieved from the content provider's website. As yet another example, the updates may be on the media, but the licenses need to be retrieved from the content provider's website. In each of these alternative cases, the proper procedures for performing **801-805** are straightforward extensions or modifications to the cases already described above.

**FIG. 9** illustrates, as an example, a flow diagram of a method for performing the Secure Export function **304** in the Secure Access and Copy Protection Management System **100.** As a preliminary matter, it is noted that this function is only performed if appropriate secure channels are open between communicating secure components participating in the export.

As an optional procedure, in **901,** the Application **102** first checks to make sure that the licenses for the content to be exported are installed in its DRM system. If they are not, then in **902,** the Application **102** causes the licenses along with available updates to be installed as described in reference to **801~803** of the Secure Access function **303** by re-inserting the original media including the content to be exported in the media drive if necessary.

After performing **902,** the Application **102** once again checks to see if the appropriate licenses have been installed. This time, if they still have not been installed, an error indication is displayed to the end-user in **904,** and the Secure Export function **304** is ended.

If the appropriate licenses are determined to have been installed in either **901** or **903,** then in **905,** the Application **102** in cooperation with other components of its local DRM system determines whether the requested export is allowed according to the installed licenses, since certain export actions may be restricted. If the export is not allowed, then in **904,** an error indication is displayed to the end-user, and the Secure Export function **304** is ended.

If the determination in **905** is that the export is allowed, then in **906,** the Application **102** and other components of the Secure Access and Copy Protection Management System **100,** as appropriate, cooperate to manage the export. For example, if the export action is an export of protected content from the inserted media to the HD Drive **116,** then the Application **102** (in cooperation with the Guard Module **422** and media drive) manages the copying of the protected content from the media to the correct location on the end user's hard disk drive. As another example, if the export action is an export of protected content from the HD Drive **116** to the Portable Device **132,** then the Application **102** manages the copying of the protected content to the Portable Device **132** after confirming that the Portable Device **132** is a secure device.

As a more complicated example, however, if the export action is an export of protected content from the HD Drive **116** to an SCDR such as Copy Media **124,** then the determination of whether or not the action is allowed in **905** requires that: (i) export to an SCDR is allowed, (ii) the number of authorized copies will not be exceeded by the action, and (iii) the application program managing the write to the SCDR is a secure application. If any of these conditions are not met, then in **904** an appropriate error is indicated and the Secure Export function **304** ends. Although not a requirement, it is also preferable that the media drive used to write to the SCDR also be a secure media drive for full protection. Even without a secure media drive, however, a secure application can still manage the burn with a standard drive by using raw mode writing.

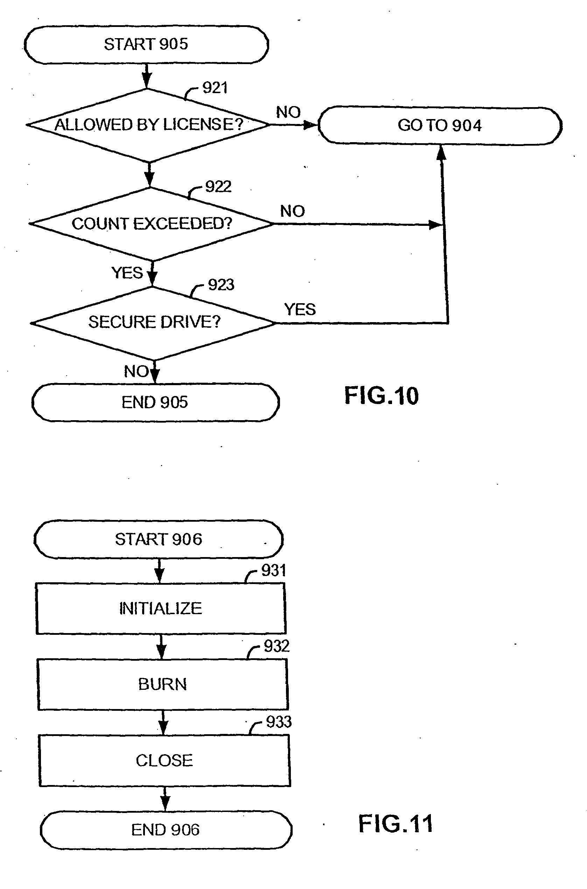

**FIGS. 10** and **11** illustrate in further detail, examples respectively of **905** and **906** of the Secure Export function **304** when exporting protected content to a secure CD-R. Referring first to **FIG. 10,** in **921,** the Application **102** confirms in cooperation with other components of its DRM system that burning an SCDR is allowed under installed licenses of the protected content. If burning is not allowed, the method goes back to **904** to cancel the SCDR burning operation, and display an appropriate error message to the user requesting the action. If burning is allowed, however, in **922,** the Application **102** then determines whether or not the requested SCDR burning operation would result in the number of authorized copies being exceeded. If the number of authorized copies would be exceeded, the method goes back to **904** to cancel the SCDR burning operation, and display an appropriate error message to the user requesting the action. If the number of authorized copies would not be exceeded, however, in **923,** the Application **102** then determines whether or not the media drive is a secure media drive by checking, for example, the "drive status" flag. If the media drive is not a secure drive, the method preferably goes back to **904** to cancel the SCDR burning operation, and display an appropriate error message to the user requesting the action. Alternatively, the method may be modified to continue with the burn using raw mode writing. If the media drive is a secure drive, however, then the Application **102** establishes a secure channel with the media drive using, for example, an AKE procedure, and proceeds to **906.**

Referring now to **FIG. 11,** in an Initialize phase **931** of the SCDR burning process, the Application **102** and the media drive first communicate to establish a secure channel between them using an AKE procedure of suitable complexity for the processing capability of the media drive. The Application **102** then gathers information about the content to be recorded, and creates a track-list that defines the desired disc type, track type, and information about the tracks to be recorded such as their length and physical location. It also determines the type of copy protection to be applied to the SCDR as indicated by the Index **410** retrieved while performing the Identification function **301.** The information is preferably gathered in this case in a Cue Sheet type structure that is augmented to contain the Index **410.** The Application **102** then passes the information to the media drive through the secure channel using, for example, an unused OpCode in the SCSI MMC command set that is reserved for this purpose and understood by a secure media drive through special programming using, for example, the Developer's Kit **200.** The media drive then receives the information, analyzes it, and retrieves the CD Cue Sheet information and the Index **410.** It then performs a device setup based on the Cue Sheet data, and a copy protection setup. To perform the copy protection setup, the media drive uses the Index **410** to index into its internal table or database to retrieve the indicated copy protection method to be used from firmware that has been programmed into the media drive by its manufacturer using, for example, the Developer's Kit **200.**

In a Burn phase **932,** the Application **102** unwraps the protected content using its DRM wrapper, encrypts it using the secret key agreed to during the AKE procedure performed to set up the secure channel between the Application **102** and the media drive, and passes the re-encrypted protected content to an SCDR engine in the media drive through the secure channel. In "on-the-fly" burning, the provided content is burned continuously by the SCDR engine. In "buffered" burning, the content is first buffered in an internal secure buffer and burning is performed from the buffer. The media drive performs the burn by embedding in or otherwise performing on the SCDR, the appropriate copy protection method, while also embedding the Index **410** into its reserved location.

Finally, in a Close phase **933,** the Application **102** completes the recording or burn process and performs any required clean-up operations after the Application **102** has finished delivering the unwrapped content to be burned and the SCDR engine has completed the burn operation. The recording operation is designed so that the SCDR is unreadable prior to completion of closing. For example, the lead-in or TOC area may not be included until the Close phase **933** so that the CD is unplayable if exporting to the CD ends, for some reason, before completion of this phase. This is desirable so as to prevent circumvention of the controlled burn process by terminating the burn operation manually prior to completion. Also, the TOC is not sent to the device in the clear, but instead, a smaller representation of the TOC is encrypted and sent to the device. For example, the device can be sent a list in an agreed upon proprietary format (that is not in the public domain such as the TOC format) that specifies the entries to be modified and how they are to be modified. This is to prevent hackers from being able to reverse engineer the actual TOC manipulation method which is use on the SCDR. As part of its closing operation, the Application **102** also adjusts the count of any counter indicating the number of authorized copies remaining after receiving an indication of a successfully completed and properly protected burn operation from the SCDR engine of the media drive.

Additional details on secure SCDR burning are described in commonly owned U.S. Patent Application Ser. No. 10/164,653 entitled "Controlling the Downloading and Recording of Digital Data," which details are incorporated herein by this reference.

Although the various aspects of the present invention have been described with respect to a preferred embodiment, it will be understood that the invention is entitled to full protection within the full scope of the appended claims.

This disclosure includes all the subject matter recited in the following clauses:
1. A method for providing secure exporting of content, comprising: causing a media drive to identify whether content on a media inserted in the media drive is protected by a copy protection method known by the media drive so that if such identification is made, exporting of the content is performed in accordance with terms of one or more licenses corresponding to the content.
2. The method according to clause 1, wherein the media drive automatically identifies whether the content on the media is protected by the copy protection method known by the media drive upon insertion of the media in the media drive.
3. The method according to clause 1, wherein an application program residing on a computer coupled to the media drive causes the media drive to identify whether the content on the media is protected by the copy protection method known by the media drive.
4. The method according to clause 1, wherein the content is stored on the media in a secure audio session with a first lead-in area including a table of contents for the content, and the copy protection method includes a modification to the table of the contents so as to prevent a data reading device from correctly reading the content.
5. The method according to clause 4, wherein the exporting of the content to a second media includes copying the modification to the table of the contents to the second media during a close phase of the second media exporting process so that the content copied to the second media prior to the close phase is not playable until after completion of the close phase.
6. The method according to clause 4, wherein the content is also stored on the media in a secure data session along with a signature identifying the media as an original copy and along with an encrypted guard module for providing secure access to the content.
7. The method according to clause 6, further comprising if the media is protected by the copy protection method known to the media drive: reading the signature; generating a key by using the signature as a seed; and decrypting the encrypted guard module with the key.
8. The method according to clause 7, further comprising if the media is protected by the copy protection method known to the media drive: verifying an application program requesting access to the content as being a secure application program; and if the application program is verified as being a secure application program, setting up a first secure channel between the decrypted guard module and the application program.
9. The method according to clause 8, further comprising if the application program is verified to be the secure application program and the media drive is a secure media drive: setting up a second secure channel between the decrypted guard module and the media drive.
10. The method according to clause 9, wherein the one or more licenses are stored on the media, and further comprising if the application program is verified to be the secure application program: providing the one or more licenses to the application program for installation in a DRM system associated with the application program.
11. The method according to clause 10, wherein the one or more licenses are stored in an embedded rights file.
12. The method according to clause 10, wherein updates to the application program are stored on the media, and further comprising if the application program is verified to be the secure application program: providing the updates to the application program for installation in the application program.
13. The method according to clause 10, wherein updates to the one or more licenses are stored on the media, and further comprising if the application program is verified to be the secure application program: providing the updates to the DRM system through the application program for installation in the DRM system.
14. The method according to clause 10, wherein updates to firmware of the secure media drive are stored on the media, and further comprising if the application program is verified to be the secure application program and the media drive is the secure media drive: providing the updates to the secure media drive for installation in the firmware.
15. An apparatus for providing secure exporting of content, comprising a processor configured with an application program causing a media drive to identify whether content on a media inserted in the media drive is protected by a copy protection method known by the media drive so that if such identification is made the application program causes exporting of the content to be performed according to terms of one or more licenses corresponding to the content.
16. The apparatus according to clause 15, wherein the media drive automatically identifies whether the content on the media is protected by the copy protection method known by the media drive upon insertion of the media in the media drive.
17. The apparatus according to clause 15, wherein the application program causes the media drive to identify whether the content on the media is protected by the copy protection method known by the media drive.
18. The apparatus according to clause 15, wherein the content is stored on the media in a secure audio session with a first lead-in area including a table of contents for the content, and the copy protection method includes a modification to the table of the contents so as to prevent a data reading device from correctly reading the content.
19. The apparatus according to clause 18, wherein the application program causes copying of the modification to the table of the contents to a second media during a close phase as part of the exporting of the content to the second media so that the content copied to the second media prior to the close phase is not playable until after completion of the close phase.
20. The apparatus according to clause 18, wherein the content is also stored on the media in a secure data session along with a signature identifying the media as an original copy and along with an encrypted guard module for providing secure access to the content.
21. The apparatus according to clause 20, wherein the encrypted guard module has an associated authentication module that reads the signature, generates a key by using the signature as a seed, and decrypts the encrypted guard module with the key if the signature identifies the media as the original copy.
22. The apparatus according to clause 21, wherein the decrypted guard module performs an authentication and key exchange with the application program so as to establish a first secure channel between the decrypted guard module and the application program.
23. The apparatus according to clause 22, wherein the decrypted guard module establishes a second secure channel between the decrypted guard module and the media drive if the media drive is a secure media drive.
24. The apparatus according to clause 23, wherein the one or more licenses are stored on the media, and the decrypted guard module provides the one or more licenses to the application program for installation in a DRM system associated with the application program.
25. The apparatus according to clause 24, wherein the one or more licenses are stored in an embedded rights file.
26. The apparatus according to clause24, wherein updates to the application program are stored on the media, and the decrypted guard module provides the updates to the application program for installation in the application program.
27. The apparatus according to clause 24, wherein updates to the one or more licenses are stored on the media, and the decrypted guard module provides the updates to the DRM system through the application program for installation in the DRM system.
28. The apparatus according to clause 24, wherein updates to firmware of the secure media drive are stored on the media, and the decrypted guard module provides the updates to the secure media drive for installation in the firmware.
29. An apparatus for providing secure access and copy protection management of content, comprising:
   a media drive configured to identify upon command a copy protection method used to protect the content on a media inserted in the media drive; and
   a processor configured with an application program to issue such command and conform its accessing and copying of the content according to terms of one or more licenses corresponding to the content if such identification is made by the media drive.
30. The apparatus according to clause 29, wherein the content is stored on the media in a secure audio session with a first lead-in area including a table of contents for the content, and the copy protection method includes a modification to the table of the contents so as to prevent a data reading device from correctly reading the content.
31. The apparatus according to clause 30, wherein the application program causes copying of the modification to the table of the contents to a second media during a close phase as part of the exporting of the content to the second media so that the content copied to the second media prior to the close phase is not playable until after completion of the close phase.
32. The apparatus according to clause 30, wherein the content is also stored on the media in a secure data session along with a signature identifying the media as an original copy and along with an encrypted guard module for providing secure access to the content.
33. The apparatus according to clause 32, wherein the encrypted guard module has an associated authentication module that reads the signature, generates a key, and decrypts the encrypted guard module with the key if the signature identifies the media as the original copy.
34. The apparatus according to clause 33, wherein the decrypted guard module establishes a first secure channel between the decrypted guard module and the application program if the application program is a secure application program.
35. The apparatus according to clause 34, wherein the decrypted guard module establishes a second secure channel between the decrypted guard module and the media drive if the media drive is a secure media drive.
36. The apparatus according to clause35, wherein the one or more licenses are stored on the media, and the decrypted guard module provides the one or more licenses to the application program for installation in a DRM system associated with the application program.
37. The apparatus according to clause 36, wherein updates to the application program are stored on the media, and the decrypted guard module provides the updates to the application program for installation in the application program.
38. The apparatus according to clause 36, wherein updates to the one or more licenses are stored on the media, and the decrypted guard module provides the updates to the DRM system through the application program for installation in the DRM system.
39. The apparatus according to clause36, wherein updates to firmware of the secure media drive are stored on the media, and the decrypted guard module provides the updates to the secure media drive for installation in the firmware.
40. A method for identifying a media as being a secure media configured to provide secure access to content residing on the media in cooperation with other components of a secure access and copy protection management system, comprising:
   retrieving an index from the media;
   if the index is not found, then indicating the media as a non-secure media; and
   if the index is found, then
      identifying a fingerprint on the media, wherein the fingerprint is indicative of a copy protection method used to protect the content on the media;
      retrieving an indication of a copy protection method indexed by the index;
      comparing the copy protection method indicated by the retrieved fingerprint with the copy protection method indexed by the index; and
      if the copy protection method indicated by the retrieved fingerprint matches the copy protection method indexed by the index, then indicating the media as a secure media.
41. The method according to clause 40, wherein the content is stored on the media in a secure audio session with a first lead-in area including a table of contents for the content, and the copy protection method includes a modification to the table of contents so as to prevent a data reading device from correctly reading the content while allowing a consumer audio device to read the content.
42. The method according to clause 41, wherein the index is stored in the first lead-in area.
43. The method according to clause 40, wherein the indication of the copy protection method indexed by the index is stored in a secure media drive in which the media is inserted.
44. A system for secure access and copy protection management of content, comprising:
   a media storing content and configured to include an index uniquely corresponding to a copy protection method used to protect content on the media, and a fingerprint indicating the copy protection method;
   a media drive configured to retrieve the index from the media, retrieve an indication of a second copy protection method indexed to the index and stored within the media drive, identify the fingerprint on the media and the copy protection method indicated by the fingerprint, and verify that the second copy protection method indexed to the index matches the copy protection method indicated by the fingerprint; and
   an application program configured to conform its accessing and copying of the content according to one or more licenses corresponding to the content if the media drive verifies that the second copy protection method indexed to the index matches the copy protection method indicated by the fingerprint.
45. The system according to clause 44, wherein the media drive automatically retrieves the index upon insertion of the media in the media drive.
46. The system according to clause44, wherein the media drive only identifies the fingerprint if the index is retrieved.
47. The system according to clause 44, wherein the content is stored on the media in a secure audio session with a first lead-in area including a table of contents for the content, and the copy protection method includes a modification to the table of the contents so as to prevent a data reading device from correctly reading the content.
48. The system according to clause 47, wherein the application program causes copying of the modification to the table of the contents to a second media during a close phase as part of exporting the content to the second media so that the content copied to the second media prior to the close phase is not playable until after completion of the close phase.
49. The system according to clause 47, wherein a copy of the content is also stored on the media in a secure data session along with a signature identifying the media as an original copy, and an encrypted guard module for providing secure access to the content.
50. The system according to clause 49, wherein the encrypted guard module has an associated authentication module that reads the signature, generates a key, and decrypts the encrypted guard module with the key if the signature identifies the media as the original copy.
51. The system according to clause 50, wherein the decrypted guard module verifies the application program as being a secure application program before establishing a first secure channel between the decrypted guard module and the application program.
52. The system according to clause 51, wherein the decrypted guard module establishes a second secure channel between the decrypted guard module and the media drive if the media drive is a secure media drive.
53. The system according to clause 52, wherein the one or more licenses are stored on the media, and the decrypted guard module provides the one or more licenses to the application program for installation in a DRM system associated with the application program.
54. The system according to clause 53, wherein the one or more licenses are stored in an embedded rights file.
55. The system according to clause 53, wherein the application program retrieves updates related to the copy protection method and causes the updates to be installed in the DRM system.
56. The system according to clause 53, wherein the decrypted guard module retrieves updates to firmware of the media drive and causes the updates to be installed in the firmware.
57. A method for securely accessing content on a media, comprising:
   decrypting and executing a guard module computer program stored along with the content on the media if the content is protected using a copy protection method known to a media drive;
   establishing a first secure channel between the guard module computer program and an application computer program requesting to access the content on the media if the application computer program is authenticated by the guard module computer program;
   establishing a second secure channel between the guard module computer program and the media drive if the copy protection method used to protect the content is known by the media drive; and
   retrieving a license for rights management of the content from the media through the second secure channel, and transmitting the license to the application computer program through the first secure channel so that the application program cannot readily understand information passed through the second secure channel and the media drive cannot readily understand information passed through the first secure channel.
58. The method according to clause 57, wherein the content is stored on the media in a secure audio session with a first lead-in area including a table of contents for the content, and the copy protection method includes modification to the table of the contents so as to prevent a data reading device from correctly reading the content.
59. The method according to clause 57, wherein the first secure channel is established using an authentication and key exchange procedure between the guard module program and the application computer program employing a first set of keys.
60. The method according to clause 59, wherein the first set of keys is changed each time the application computer program makes a new request to access the content on the media.
61. The method according to clause 57, wherein the second secure channel is established using an authentication and key exchange procedure between the guard module program and the media drive employing a second set of keys.
62. The method according to clause 61, wherein the second set of keys is changed each time the application computer program makes a new request to access the content on the media.
63. The method according to clause 57, wherein the application computer program is authenticated by the guard module program by the guard module requesting the application computer program to encrypt a string of bits with a private key of the application computer program, decrypting the encrypted string of bits with a public key of the application computer program, and confirming that the decrypted string of bits matches the string of bits provided to the application computer program for encrypting.

## Claims

1. A method of identifying a media as being a secure media configured to provide secure access to content residing on the media in cooperation with other components of a secure access and copy protection management system, comprising:
retrieving an index from the media;
if the index is not found, then indicating the media as a non-secure media; and
if the index is found, then identifying a fingerprint on the media, wherein the fingerprint is indicative of a copy protection method used to protect the content on the media;
retrieving an indication of a copy protection method indexed by the index;
comparing the copy protection method indicated by the retrieved fingerprint with the copy protection method indexed by the index; and
if the copy protection method indicated by the retrieved fingerprint matches the copy protection method indexed by the index, then indicating the media as a secure media.

2. The method according to claim 1, wherein the content is stored on the media in a secure audio session with a first lead-in area including a table of contents for the content, and the copy protection method includes a modification to the table of contents so as to prevent a data reading device from correctly reading the content while allowing a consumer audio device to read the content.

3. The method according to claim 2, wherein the index is stored in the first lead-in area.

4. The method according to claim 1, wherein the indication of the copy protection method indexed by the index is stored in a secure media drive in which the media is inserted.

5. A system for secure access and copy protection management of content, comprising:
a media storing content and configured to include an index uniquely corresponding to a copy protection method used to protect content on the media, and a fingerprint indicating the copy protection method;
a media drive configured to retrieve the index from the media, retrieve an indication of a second copy protection method indexed to the index and stored within the media drive, identify the fingerprint on the media and the copy protection method indicated by the fingerprint, and verify that the second copy protection method indexed to the index matches the copy protection method indicated by the fingerprint; and
an application program configured to conform its accessing and copying of the content according to one or more licenses corresponding to the content if the media drive verifies that the second copy protection method indexed to the index matches the copy protection method indicated by the fingerprint.

6. The system according to claim 5, wherein the media drive automatically retrieves the index upon insertion of the media in the media drive.

7. The system according to claim 5, wherein the media drive only identifies the fingerprint if the index is retrieved.

8. The system according to claim 5, wherein the content is stored on the media in secure audio session with a first lead-in area including a table of contents for the content, and the copy protection method includes a modification to the table of the contents so as to prevent a data reading device from correctly reading the content.

9. The system according to claim 8, wherein the application program causes copying of the modification to the table of the contents to a second media during a close phase as part of exporting the content to the second media so that the content copied to the second media prior to the close phase is not playable until after completion of the close phase.

10. The system according to claim 8, wherein a copy of the content is also stored on the media in a secure data session along with a signature identifying the media as an original copy, and an encrypted guard module for providing secure access to the content.

11. The system according to claim 10, wherein the encrypted guard module has an associated authentication module that reads the signature, generates a key, and decrypts the encrypted guard module with the key if the signature identifies the media as the original copy.

12. The system according to claim 11, wherein the decrypted guard module verifies the application program as being a secure application program before establishing a first secure channel between the decrypted guard module and the application program.

13. The system according to claim 12, wherein the decrypted guard module establishes a second secure channel between the decrypted guard module and the media drive if the media drive is a secure media drive.

14. The system according to claim 13, wherein the one or more licenses are stored on the media, and the decrypted module provides the one or more licenses to the application program for installation in a DRM system associated with the application program.

15. The system according to claim 14, wherein the one or more licenses are stored in an embedded rights file.

16. The system according to claim 14, wherein the application program retrieves updates related to the copy protection method and causes the updates to be installed in the DRM system.

17. The system according to claim 14, wherein the decrypted guard module retrieves updates to firmware of the media drive and causes the updates to be installed in the firmware.
